# EUROPÄISCHE PATENTSCHRIFT

(11) **EP 1 779 065 B1**
(45) Veröffentlichungstag und Bekanntmachung des Hinweises auf die Patenterteilung: **14.05.2014**
(21) Anmeldenummer: 05750037.3
(22) Anmeldetag: 14.06.2005
(51) Int. Cl.: G01C 21/36, G08G 1/0969

(54) **Verfahren, Navigationssystem und Speichereinrichtung zur Darstellung von Karteninformationen**
Method, navigation system and memory device for representing map information
Procédé, système de navigation et dispositif de mémoire pour représenter des informations cartographiques

(30) Priorität: 10.08.2004 DE 102004038740
(43) Veröffentlichungstag der Anmeldung: 02.05.2007
(73) Patentinhaber: ROBERT BOSCH GMBH, 70442 Stuttgart (DE)
(72) Erfinder: JUNG, Thomas, 33613 Bielefeld (DE); BRUENIG, Michael, Palo Alto, CA 94304 (US); SMIRNOV, Lothar-Frank, 70567 Stuttgart (DE)
(86) Internationale Anmeldenummer: PCT/EP2005/052742
(87) Internationale Veröffentlichungsnummer: WO 2006/018335

(56) Entgegenhaltungen:
- EP-A- 1 288 628
- EP-A- 1 435 508

## Beschreibung

Die vorliegende Erfindung betrifft ein Verfahren zur Darstellung von Karteninformationen für ein Navigationssystem, bei dem die Karteninformation Flächen, mit denen eine Draufsicht auf einen Kartenausschnitt dargestellt wird, und Linien aufweist, mit denen ein Verkehrswegenetz dargestellt wird. Die Erfindung betrifft ferner ein Navigationssystem zur Durchführung des erfindungsgemäßen Verfahrens.

Navigationssysteme haben in den letzten Jahren, insbesondere im mobilen Einsatz in Kraftfahrzeugen, eine weite Verbreitung gefunden. In den bekannten Systemen sind die Grundfunktionen "Ortung", "Zielauswahl", "Routenberechnung" und "Zielführung" implementiert. Für alle Funktionen ist eine digitale Karte des Straßennetzes erforderlich, die üblicherweise auf einer CD-ROM, einer DVD oder einer HD untergebracht und abgespeichert ist.

Zusätzlich ist die Darstellung als bevorzugt farbige Karte möglich. Die Darstellung der Karte auf einem Farbbildschirm kann je nach System über einen Maßstabbereich von ca. 1 zu 8.000 bis 1 zu 16.000.000 erfolgen. Diese Darstellung ist hilfreich, um je nach Maßstab einen Überblick über die Fahrtroute im näheren oder weiteren Umfeld zu erhalten. Die Orientierung wird durch topographische Informationen, beispielsweise bebaute Gebiete, Gewässer, Wälder und Eisenbahnstrecken erleichtert.

In aktuellen Navigationssystemen mit einer Kartendarstellung wird die Information als Vektorkarte auf einem Farbbildschirm angezeigt. Die Vektorisierung ermöglicht die Veränderung des Abbildungsmaßstabes auf Grund derselben zu Grunde liegenden, abgespeicherten Daten.

In dieser Kartendarstellung wird die Gesamtinformation aus Flächen, Linien und Punkten zusammengesetzt. Durch unterschiedliche Farbgebungen der Flächen wird das darzustellende Gebiet charakterisiert. So wird eine bebaute Fläche, also eine Ortschaft, oftmals mit der Farbe Rot vorsehen. Mit blauen Flächen werden Gewässer und mit unterschiedlichen Grüntönen Felder bzw. Wälder gekennzeichnet. In der Darstellung werden Linien unterschiedlicher Stärke und Farbe für die verschiedenen Straßen, Eisenbahnstrecken bzw. Flüsse verwendet. Als weiteres Gestaltungselement werden einzelne Punkte bzw. Icons für sogenannte POls (point of Interest), beispielsweise Tankstellen, Werkstätten, Hotels etc., in die Gesamtheit der Kartendarstellung eingefügt.

Die Flächendarstellung ist stark vereinfacht und folglich sehr abstrahiert. Gerade bei einer Darstellung mit höherer Auflösung, also insbesondere der näheren Umgebung, sind der Darstellung keine zusätzlichen Informationen entnehmbar, die dem Anwender die Orientierung erleichtern würden.

Aus der EP 1 435 508 A2 geht der Vorschlag hervor, bei einem Navigationssystem Bilder unterschiedlicher Auflösung miteinander so zu überlagern, dass die Übergänge unauffällig sind. Aus der EP 1 288 628 A2 gehen weitere Vorschläge für Bilddarstellungen bei Navigatonssystemen hervor.

Aufgabe der vorliegenden Erfindung ist es daher, die Darstellung der Flächeninformation in Karten für Navigationssysteme durch zusätzliche Hintergrundinformationen zu verbessern.

Diese Aufgabe wird erfindungsgemäß dadurch gelöst, dass die Darstellung der Flächen in einer 2- oder 3-dimensionalen Ansicht zumindest teilweise anhand von gespeicherten Luft- und/oder Satellitenaufnahmen generiert wird, wobei die Auflösung der Luft- und/oder Satellitenaufnahmen in Abhängigkeit der Dichte des dargestellten Verkehrswegenetzes variiert. Diese zusätzliche strukturierte Hintergrundinformation der Aufnahmen, beispielsweise Gebäudeumrisse und Bepflanzungen, helfen dem Anwender die Information der Karte auf die Realität zu übertragen. Hierdurch wird ihm die Orientierung deutlich erleichtert. Durch die 3-dimensionale Ansicht ist eine perspektivische Darstellung ermöglicht.

Auf Grund einer Verwendung von Luft- und/oder Satellitenaufnahmen als Hintergrundinformation in einem Bildschirm-Navigationssystem wird die Menge der erforderlichen Kartendaten erheblich erhöht. Durch die Einbeziehung der Dichte des dargestellten Verkehrsnetzes als ein Strukturparameter für die Auflösung der verwendeten Aufnahmen, kann die erforderliche Datenmenge deutlich reduziert werden. In Bereichen mit einer hohen Straßendichte, beispielsweise in Ballungsräumen, werden detailreiche Aufnahmen mit einer größeren Hintergrundinformation verwendet. Hingegen werden in Gebieten, die kaum besiedelt sind, beispielsweise ländliche Regionen, Aufnahmen mit einer geringeren Auflösung und folglich mit geringer Informationsmenge zur Darstellung herangezogen. Hierdurch ist eine ausreichend informative Darstellung der Kartendarstellung mit einer handhabbaren Datenmenge ermöglicht.

Eine bevorzugte Ausgestaltung des erfindungsgemäßen Verfahrens sieht vor, dass die Auflösung der Luft- und/oder Satellitenaufnahmen in Abhängigkeit des darzustellenden Kartenausschnitts variiert. Hierdurch ist eine Anpassung der Genauigkeit der Darstellung situationsbedingt ermöglicht.

In einer vorteilhaften Weiterführung des erfindungsgemäßen Verfahrens wird die Auflösung der Luft- und/oder Satellitenaufnahmen zusätzlich in Abhängigkeit von der durchschnittlichen Einwohnerzahl pro Fläche variiert. Dieser Strukturparameter berücksichtigt den Zusammenhang, dass in Ortschaften, beispielsweise Städten, die Bevölkerungsdichte deutlich höher ist, als in ländlichen Gebieten.

Als ein weiterer vorteilhafter Strukturparameter wird die durchschnittliche Gebäudeanzahl pro Fläche berücksichtigt. Dieser Strukturparameter ist prinzipiell ähnlich zum vorherigen, in dem die Einwohnerzahl berücksichtigt wird, jedoch ist die Gebäudeanzahl pro Fläche direkt aus der Luft- und/oder Satellitenaufnahme entnehmbar, ohne auf andere Quellen, beispielsweise Statistiken der Meldebehörden, zurückgreifen zu müssen.

Ein Navigationssystem zur Durchführung des erfindungsgemäßen Verfahrens weist eine Speichereinrichtung für Karteninformationsdaten, eine Prozessoreinrichtung, die die Karteninformationsdaten verarbeitet, und eine Darstellungseinrichtung auf, die die verarbeiteten Karteninformationsdaten ausgibt. In der Speichereinrichtung sind als Karteninformationsdaten sowohl das vektorisierte Straßennetz als auch Bilddaten von Luft- und/oder Satellitenaufnahmen als Flächeninformationsdaten gespeichert. Dabei kann die Speichereinrichtung beliebig, d.h. jede optische und/oder magnetische Speichereinrichtung kann zur Realisierung verwendet werden. Die Prozessoreinrichtung fügt die unterschiedlichen Karteninformationsdaten zusammen, so dass eine einheitliche Darstellung mit Flächen, Linien und Punkten erzeugt wird, die anschließend auf der Darstellungseinrichtung, beispielsweise einem Farbmonitor aufgegeben wird.

Bei einem bevorzugten erfindungsgemäßen Navigationssystem weist die Speichereinrichtung eine CD (CompactDisc) und/oder eine DVD (DigitalVersatileDisc) auf. Ferner ist eine Speicherung auf HD oder beliebigen Speicherbausteinen denkbar. Dies ermöglicht eine einfache Aktualisierung der vorhandenen Daten und/oder ein Austausch für die Anwendung in einem anderen Land oder Staat.

Bevorzugt weist die Speichereinrichtung eines erfindungsgemäßen Navigationssystem Bilddaten von Luft- und/oder Satellitenaufnahmen unterschiedlicher Auflösungen auf. Dies ermöglicht eine unterschiedlich genaue Darstellung je nach Bedeutung des betreffenden Gebietes.

Die Erfindung wird nachfolgend anhand der beigefügten Figuren beispielhaft näher erläutert. Diese zeigen in:
Figur 1 - eine schematische Skizze eines Navigationssystems zur Durchführung des erfindungsgemäßen Verfahrens;
Figur 2 - eine übliche Kartendarstellung für ein Navigationssystem;
Figur 3 - einen Ausschnitt einer Luft- und/oder Satellitenaufnahme; und
Figur 4 - eine mit dem erfindungsgemäßen Verfahren erzeugte Kartendarstellung für ein Navigationssystem.

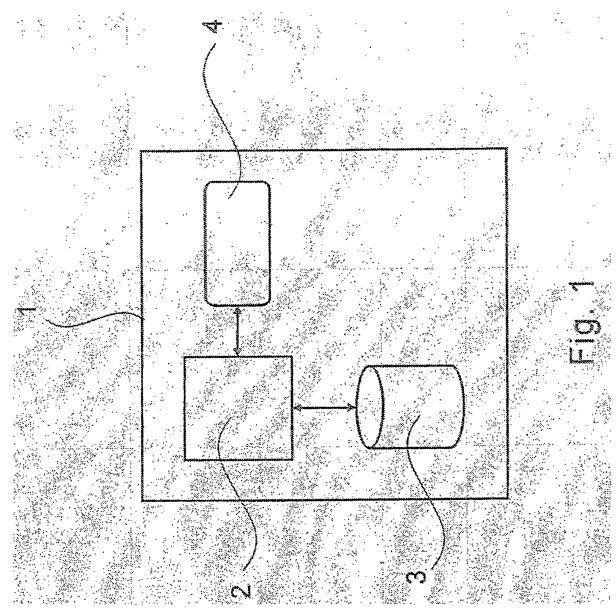

Figur 1 zeigt schematisch ein Navigationssystem 1 mit einer Prozessoreinrichtung 2. Die Prozessoreinrichtung 2 ist mit einer Speichereinrichtung 3 verbunden und verarbeitet die in der Speichereinrichtung 3 abgelegten Karteninformationen. Die von der Prozessoreinrichtung 2 erzeugte Kartendarstellung, beispielsweise eine Überlagerung der vektorisierten Karte des Straßennetzes mit Luft- bzw. Satellitenaufnahmen, wird anschließend auf der Darstellungseinrichtung 4, beispielsweise auf einem Farbmonitor, ausgegeben.

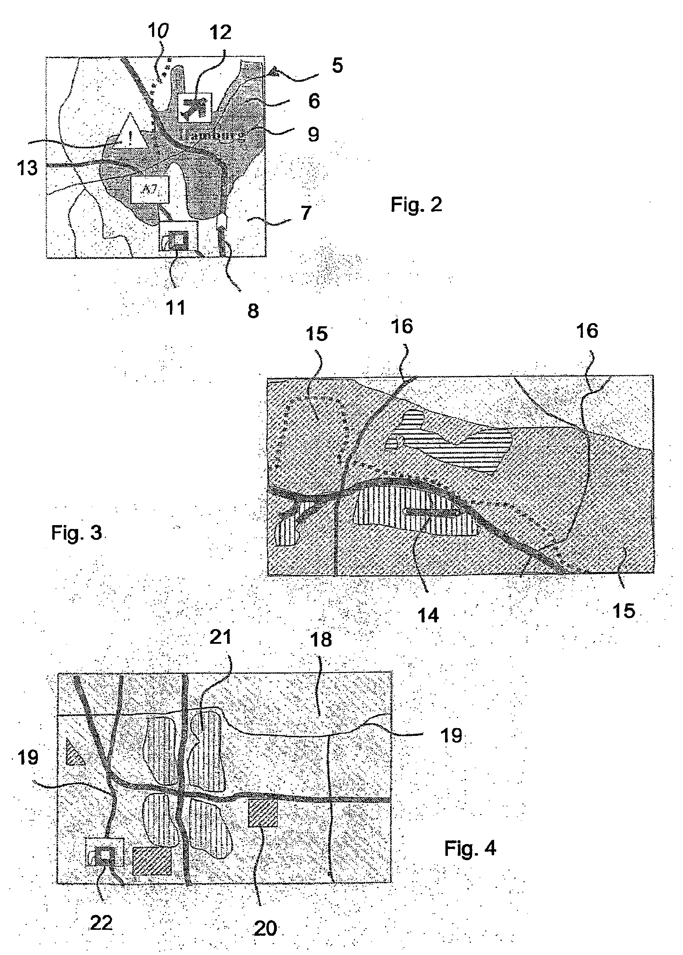

Im folgendem wird das erfindungsgemäße Verfahren detaillierter beschrieben. In der Figur 2 ist ein Kartenausschnitt 5 mit einem Teilgebiet eines Ballungsraumes, im vorliegenden Beispiel der Großraum Hamburg, dargestellt. Die Flächeninformation ist durch im Wesentlichen zwei unterschiedliche Farbgebungen differenziert. Die etwas dunklere Fläche 6 kennzeichnet bebautes Gebiet. Die hellere Fläche 7 zeigt an, dass es sich im Wesentlichen um Naturflächen, insbesondere Felder bzw. Wälder handelt.

Ferner sind der Figur verschiedene Linien 8, 9 und 10 zu entnehmen, die das Verkehrsnetz anzeigen. Die stärker und farblich deutlicher hervorgehobene Straße 8 ist eine Bundesautobahn, während die mit der Bezugsziffer 9 bezeichnete Straße eine weniger ausgebaute Straße, beispielsweise eine Landstraße bzw. eine innerstädtische Ein- oder Ausfallstraße, wiedergibt. Die mit zwei Farben alternierend dargestellte Strecke 10 zeigt den Verlauf einer Eisenbahn- bzw. Schienenstrecke.

Ferner befinden sich in der Darstellung des Kartenausschnitts 5 zusätzliche Bildpunkte bzw. Icons zur Kennzeichnung POIs (point of interest). So ist mit der Bezugsziffer 11 ein Icon zur Darstellung der Lage einer Tankstelle markiert. Mit dem Icon 12 wird die Position des Flughafen und mit dem Icon 13 die Lage einer Verkehrsbehinderung bzw. eines Verkehrsstaus angezeigt.

Figur 3 zeigt eine Luft- und/oder Satellitenaufnahme eines innerstädtischen Gebietes. Der Figur 3 sind der Verlauf eines Flusses 14 sowie dicht besiedelte Gebiete 15 zu entnehmen. Ebenfalls sind in der Figur 3 Verläufe von Straßen 16 verschiedener Art und Größe erkennbar.

Figur 4 zeigt ein mit dem erfindungsgemäßen Verfahren generierten Kartenausschnitt. Als Hintergrunddaten sind dem Kartenausschnitt Daten einer Luft- und/oder Satellitenaufnahme unterlegt. Auch diesem Hintergrundbild ist als detailliertere Information das vektorisierte Straßennetz überlagernd dargestellt. So sind in dem Kartenausschnitt 17 eine Autobahn 18 sowie weitere Straßen 19 deutlich zu erkennen.

Zwischen den einzelnen Straßen 18, 19 ist mm nicht nur eine monotone Fläche, sondern die reale Struktur des entsprechenden Gebietes zu erkennen. So sieht der Anwender auch in der Anzeige des Navigationssystems, ob sich neben der Straße ein Gebäude 20 oder eine Grünanlage 21 befindet.

Schließlich werden zusätzlich besondere POIs durch Bildpunkte bzw. Icons 22 angezeigt. Die entsprechenden Bildbereiche, beispielsweise der Umriss eines öffentlichen Gebäudes, wird transparent eingefärbt Dadurch hebt sich dieses Gebäude von der dargestellten Umgebung ab und ist einfacher identifizierbar.

Wenn die strukturierte Hintergrundinformation durch Luft- und/oder Satellitenaufnahmen generiert werden, führt dies zu einer erheblichen Erhöhung der Kartendaten in dem Navigationssystem 1 (Figur 1). Für verschiedene Darstellungsmaßstäbe müssen unterschiedlich hoch aufgelöste Bildinformationen vorgehalten werden. Für Deutschland, mit einer Ausdehnung von etwa 876 mal 632 km, sind die in folgender Tabelle 1 aufgelisteten Datenmengen zu entnehmen.

**Tabelle 1**

| **Fläche** | **1m Auflösung** | **5m Auflösung** | **20m Auflösung** | **100m Auflösung** |
|---|---|---|---|---|
| 375 tkm² | 140 GB | 6 GB | 350 MB | 14 MB |

Die vorstehend angegebenen Datenmengen beziehen sich auf ein komprimiertes Datenformat. Diese Angaben sind beispielhaft und dienen nur als grobe Orientierung und können ferner in Abhängigkeit des verwendeten Kompressionsalgorithmus variieren.

Aus diesen Daten ist ersichtlich, dass bei einer hohen Auflösung, beispielsweise 1m, die Gesamtdatenmenge nicht mehr auf handelsüblichen Speichermedien, CD bzw. DVD möglich ist. Eine Reduktion der Auflösung führt aber gerade in den kleineren Darstellungsmaßstäben (50 m - 5 km) zu einer unansehnlichen, nicht akzeptablen Darstellung. Flächendeckend könnte dabei nur mit einer Auflösung mit 10m pro Pixel gearbeitet werden, falls für das gesamte Bundesgebiet die gleiche Auflösung gewählt wird.

Deshalb ist erfindungsgemäß vorgesehen, dass die Auflösung für unterschiedliche Gebiete in Abhängigkeit der Bedeutung ausgewählt wird. Zur Bewertung der Bedeutung wird als Strukturparameter die Dichte des Verkehrsnetzes herangezogen. Bezieht man nun diesen Strukturparameter in eine fokussierte Aufteilung der Auflösungen ein, so werden in Bereichen, in denen eine hohe Dichte des Verkehrswegenetzes vorliegt, detaillierterer Bildinformationen verwendet. In zumeist ländlichen Gebieten, die kaum Verkehrswege aufweisen und somit wenig orientierungsrelevante Informationen bieten, kommen hingegen nur Daten mit einer gröberen Auflösung zum Einsatz. Dadurch kann bei einer gleichbleibenden Betrachtungsqualität der Datenumfang der gespeicherten Bilddaten deutlich reduziert werden.

Die resultierende Speicherkapazität für die Bilddarstellung ist dann in einer Größenordnung, die auf handelsübliche Speichermedien, beispielsweise CDs gespeichert werden können. Durch die Verwendung eines Speichermediums mit größerer Speicherkapazität, beispielsweise einer DVD, kann die Bewertung der Verkehrswegedichte variiert werden, um die Speicherkapazität des Speichermediums optimal auszunutzen.

Zusätzlich zu dem Strukturparameter Straßendichte kann Bevölkerungsdichte und/oder die Dichte der Bebauung der betreffenden Gebiete als Bewertungskriterium herangezogen werden. Vorteil der Bebauungsdichte als Strukturkriterium ist, dass die Information auf den zugrundeliegenden Luft- und/oder Satellitenaufnahmen selbst vorhanden ist. Eine zusätzliche Datenquelle, beispielsweise die Statistiken der Meldebehörden ist nicht erforderlich. Logischerweise kann auch eine Kombination aller drei Strukturparameter als sinnvoller Bewertungsmaßstab herangezogen werden.

## Patentansprüche

1. Verfahren zur Darstellung von gespeicherten Karteninformationen für ein Navigationssystem, bei dem die Karteninformation Flächen (15), mit denen eine Draufsicht auf einen Kartenausschnitt (5) dargestellt wird, und Linien (8, 9, 10, 16, 19) aufweist, mit denen ein Verkehrswegenetz dargestellt wird, **dadurch gekennzeichnet, dass** die Darstellung der Flächen in einer 2- oder 3-dimensionalen Ansicht zumindest teilweise anhand von Luft- und/oder Satellitenaufnahmen generiert wird, wobei die Auflösung der Luft- und/oder Satellitenaufnahmen in Abhängigkeit der Dichte des dargestellten Verkehrswegenetzes variiert.

2. Verfahren nach Anspruch 1, **dadurch gekennzeichnet dass** die Auflösung der Luft- und/oder Satellitenaufnahmen in Abhängigkeit des darzustellenden Kartenausschnitts variiert.

3. Verfahren nach Anspruch 1 oder 2, **dadurch gekennzeichnet, dass** die Auflösung der Luft- und/oder Satellitenaufnahmen zusätzlich in Abhängigkeit von der durchschnittlichen Einwohnerzahl pro Fläche variiert.

4. Verfahren nach einem der vorstehenden Ansprüche, **dadurch gekennzeichnet, dass** die Auflösung der Luft- und/oder Satellitenaufnahmen zusätzlich in Abhängigkeit von der durchschnittlichen Gebäudeanzahl pro Fläche variiert.

5. Verfahren nach einem der vorstehenden Ansprüche, **dadurch gekennzeichnet, dass** zumindest ein Raumpunkt in der Karteninformation mit einem Bildelement (11, 12, 22) markiert wird.

6. Navigationssystem (1), eingerichtet zur Durchführung des Verfahrens nach einem der Ansprüche 1 bis 5 mit:
- einer Speichereinrichtung (3) auf der Karteninformationsdaten gespeichert sind, welche darzustellende Flächen zumindest teilweise in Form von Luft- und/oder Satellitenaufnahmen aufweisen, bei denen die Auflösung in Abhängigkeit von der Dichte des in den Karteninformationsdaten gespeicherten, darzustellenden Verkehrswegenetzes variiert,
- einer Prozessoreinrichtung (2), die die Karteninformationsdaten verarbeitet, und
- einer Darstellungseinrichtung (4), die die verarbeiteten Karteninformationsdaten ausgibt, wobei die Prozessoreinrichtung (2) zur Erzeugung der Darstellung der Karteninformationen nach dem Verfahren nach einem der Patentansprüche 1 bis 5 auf der Darstellungseinrichtung (4) eingerichtet ist.

7. Navigationssystem nach Anspruch 6, **dadurch gekennzeichnet, dass** die Speichereinrichtung (3) eine Compact Disc (CD) und/oder eine Digital Versatile Disc (DVD) aufweist.

8. Navigationssystem nach Anspruch 6 oder 7, **dadurch gekennzeichnet, dass** die Speichereinrichtung (3) Bilddaten von Luft- und/oder Satellitenaufnahmen unterschiedlicher Auflösungen aufweist.

9. Speichereinrichtung (3) eines Navigationssystems (1) nach einem der Ansprüche 6 bis 8, **dadurch gekennzeichnet, dass** auf der Speichereinrichtung (3) Karteninformationsdaten zur Verarbeitung durch eine Prozessoreinrichtung (2) des Navigationssystems (1) gespeichert sind, wobei die Karteninformationsdaten darzustellende Flächen zumindest teilweise in Form von Luft- und/oder Satellitenaufnahmen aufweisen, bei denen die Auflösung in Abhängigkeit von der Dichte des in den Karteninformationsdaten gespeicherten, darzustellenden Verkehrswegenetzes variiert.

10. CD, DVD, HD oder sonstiger Speicherbaustein für eine Speichereinrichtung (3) nach Anspruch 9, auf der bzw. auf dem Karteninformationsdaten zur Verarbeitung durch eine Prozessoreinrichtung (2) des Navigationssystems (1) gespeichert sind, wobei die Karteninformationsdaten darzustellende Flächen zumindest teilweise in Form von Luft- und/oder Satellitenaufnahmen aufweisen, bei denen die Auflösung in Abhängigkeit von der Dichte des in den Karteninformationsdaten gespeicherten, darzustellenden Verkehrswegenetzes variiert.

## Claims

1. Method for presenting stored map information for a navigation system, in which the map information has areas (15), which are used to present a plan view of a map detail (5), and lines (8, 9, 10, 16, 19), which are used to present a traffic route network, **characterized in that** the presentation of the areas in a two- or three-dimensional view is generated at least to some extent from aerial and/or satellite photographs, wherein the resolution of the aerial and/or satellite photographs varies on the basis of the density of the presented traffic route network.

2. Method according to Claim 1, **characterized in that** the resolution of the aerial and/or satellite photographs varies on the basis of the map detail to be presented.

3. Method according to Claim 1 or 2, **characterized in that** the resolution of the aerial and/or satellite photographs additionally varies on the basis of the average number of inhabitants per area.

4. Method according to one of the preceding claims, **characterized in that** the resolution of the aerial and/or satellite photographs additionally varies on the basis of the average number of buildings per area.

5. Method according to one of the preceding claims, **characterized in that** at least one spatial point in the map information is marked with an image element (11, 12, 22).

6. Navigation system (1), set up to carry out the method according to one of Claims 1 to 5, having:
- a memory device (3) that stores map information data that have areas to be presented at least to some extent in the form of aerial and/or satellite photographs for which the resolution varies on the basis of the density of the traffic route network to be presented that is stored in the map information data,
- a processor device (2) that processes the map information data, and
- a presentation device (4) that outputs the processed map information data, wherein the processor device (2) is set up to produce the presentation of the map information using the method according to one of Patent Claims 1 to 5 on the presentation device (4).

7. Navigation system according to Claim 6, **characterized in that** the memory device (3) has a Compact Disc (CD) and/or a Digital Versatile Disc (DVD).

8. Navigation system according to Claim 6 or 7, **characterized in that** the memory device (3) has image data from aerial and/or satellite photographs of different resolutions.

9. Memory device (3) in a navigation system (1) according to one of Claims 6 to 8, **characterized in that** the memory device (3) stores map information data for processing by a processor device (2) in the navigation system (1), wherein the map information data have areas to be presented at least to some extent in the form of aerial and/or satellite photographs for which the resolution varies on the basis of the density of the traffic route network to be presented that is stored in the map information data.

10. CD, DVD, HD or other memory module for a memory device (3) according to Claim 9, which stores map information data for processing by a processor device (2) in the navigation system (1), wherein the map information data have areas to be presented at least to some extent in the form of aerial and/or satellite photographs for which the resolution varies on the basis of the density of the traffic route network to be presented that is stored in the map information data.

## Revendications

1. Procédé de représentation d'informations cartographiques mémorisées pour un système de navigation, dans lequel les informations cartographiques comportent des surfaces (15) à l'aide desquelles une vue en élévation est représentée sur un extrait de carte (5) ainsi que des lignes (8, 9, 10, 16, 19) au moyen desquelles un réseau routier est représenté, **caractérisé en ce que** la représentation des surfaces dans une vue bi ou tridimensionnelle est générée au moins en partie à l'aide de vues aériennes et/ou par satellites, la résolution des vues aériennes et/ou par satellites variant en fonction de la densité du réseau routier représenté.

2. Procédé selon la revendication 1, **caractérisé en ce que** la résolution des vues aériennes et/ou par satellites varie en fonction de l'extrait de carte à représenter.

3. Procédé selon la revendication 1 ou 2, **caractérisé en ce que** la résolution des vues aériennes et/ou par satellites varie en outre en fonction du nombre d'habitants moyen par surface.

4. Procédé selon l'une quelconque des revendications précédentes, **caractérisé en ce que** la résolution des vues aériennes et/ou par satellites varie en outre en fonction du nombre de bâtiments moyen par surface.

5. Procédé selon l'une quelconque des revendications précédentes, **caractérisé en ce qu'**au moins un point spatial contenu dans les informations cartographiques est marqué à l'aide d'un élément d'image (11, 12, 22).

6. Système de navigation (1), conçu pour mettre en oeuvre le procédé selon l'une quelconque des revendications 1 à 5, avec :
- un dispositif de mémoire (3) sur lequel des données d'informations cartographiques sont mémorisées comportant des surfaces à représenter au moins en partie sous la forme de vues aériennes et/ou par satellites, dans lesquels la résolution varie en fonction de la densité du réseau routier à représenter mémorisé dans les données d'informations cartographiques ;
- un dispositif de traitement (2) traitant les données d'informations cartographiques ; et
- un dispositif de représentation (4) représentant les données d'informations cartographiques traitées, le dispositif de traitement (2) étant conçu pour représenter les informations cartographiques selon le procédé selon l'une quelconque des revendications 1 à 5 sur le dispositif de représentation (4).

7. Système de navigation selon la revendication 6, **caractérisé en ce que** le dispositif de mémoire (3) comporte un CD (Compact Disc) et/ou un DVD (Digital Versatile Disc).

8. Système de navigation selon la revendication 6 ou 7, **caractérisé en ce que** le dispositif de mémoire (3) comporte des données d'image de vues aériennes et/ou par satellites de différentes résolutions.

9. Dispositif de mémoire (3) d'un système de navigation (1) selon l'une quelconque des revendications 6 à 8, **caractérisé en ce que** des données d'informations cartographiques sont mémorisées sur le dispositif de mémoire (3) pour réaliser le traitement par le biais d'un dispositif de traitement (2) du système de navigation (1), les données d'informations cartographiques comportant des surfaces à représenter au moins en partie sous la forme de vues aériennes et/ou par satellites dans lesquelles la résolution varie en fonction de la densité du réseau routier à représenter mémorisé dans les données d'informations cartographiques.

10. CD, DVD, HD ou tout autre élément de mémoire pour un dispositif de mémoire (3) selon la revendication 9, sur lequel des données d'informations cartographiques sont mémorisées pour permettre leur traitement par un dispositif de traitement (2) du système de navigation (1), les données d'informations cartographiques comportant des surfaces à représenter au moins en partie sous la forme de vues aériennes et/ou par satellites, dans lesquelles la résolution varie en fonction de la densité du réseau routier à représenter mémorisé dans les données d'informations cartographiques.
